# EUROPEAN PATENT APPLICATION

(11) **EP 4 642 132 A1**
(43) Date of publication of application: **29.10.2025**
(21) Application number: 23909103.6
(22) Date of filing: 06.07.2023
(51) Int. Cl.: H04W 72/20

(54) **BEAM SWITCHING METHOD FOR INTERMEDIATE NODE, AND DEVICE**

(30) Priority: 27.12.2022 CN 202211686484
(71) Applicant: China Academy Of Information And Communications, Beijing 100191 (CN)
(72) Inventor: JIAO, Huiying, Beijing 100191 (CN); WANG, Zhiqin, Beijing 100191 (CN); DU, Ying, Beijing 100191 (CN); WEI, Kejun, Beijing 100191 (CN); XU, Xiaoyan, Beijing 100191 (CN); SHEN, Xia, Beijing 100191 (CN); YAN, Zhiyu, Beijing 100191 (CN); LIU, Xiaofeng, Beijing 100191 (CN); JIANG, Jiamo, Beijing, 100191 (CN); WEI,Guiming, Beijing, 100191 (CN); XU,Fei, Beijing, 100191 (CN)
(74) Representative: Boult Wade Tennant LLP
(86) International application number: PCT/CN2023/106119
(87) International publication number: WO 2024/139159

(57) **Abstract**

The present application discloses a beam switching method for an intermediate node, applied to a wireless communication system. The wireless communication system includes a network device, an intermediate node apparatus, and user equipment. On a user node side, control information is received, wherein the control information includes a beam switching indication for the intermediate node; within a first threshold duration after receiving the control information, downlink control signaling and/or data are/is forwarded by using a beam controlled by an intermediate node before switching; and after a sum of the first threshold duration and a second threshold duration following receiving of the control information, the downlink control signaling and/or the data are/is forwarded by using a beam controlled by an intermediate node after switching. The present application further includes a device and system for implementing the method described. The present application solves a problem of loss of downlink control signaling and downlink data in a beam switching process of the intermediate node.

## Description

### CROSS-REFERENCE TO RELATED APPLICATIONS

The present application claims priority to Chinese patent application No. 202211686484.0 filed on December 27, 2022 to the China National Intellectual Property Administration, and entitled "Beam Switching Method for Intermediate Node and Device", the entire content of which is incorporated herein by reference.

### TECHNICAL FIELD

The present application relates to the technical field of mobile communications, in particular to a beam switching method for an intermediate node and a device.

### BACKGROUND

In the design of an NR system, an important issue related to a dynamic analog beam is the need for a certain gap between a downlink control channel (PDCCH) and a downlink data channel (PDSCH). As the PDCCH contains indication information for the sending beam of the PDSCH, this gap is used to achieve decoding of the PDCCH and conversion from analog beamforming of the PDCCH to analog beamforming of the PDSCH. Considering that beam conversion time of a base station antenna is relatively short (in nanoseconds), which is less than a length of a cyclic prefix (CP), the impact on performance can be ignored, while decoding of the PDCCH requires a certain amount of time (in an order of magnitudes from a symbol to a time slot, depending on a capability of user equipment (UE)). Therefore, in a demodulation and decoding process of the PDCCH by the UE, if the gap between the PDSCH and the PDCCH is small, the UE cannot obtain transmission beam indication information for receiving the PDSCH. In order to receive the information of the PDSCH, a threshold is defined in the standard to distinguish whether PDCCH demodulation and decoding are completed or not completed. If a length of a time slot between the PDCCH and the PDSCH is less than the threshold, the UE starts receiving the PDSCH before the completion of the PDCCH demodulation and decoding, and cannot obtain the beam indication from the PDCCH. At this time, the PDSCH may use a default beam for receiving. If the gap between the PDCCH and the PDSCH is greater than the threshold, the beam indicated by the PDCCH is used for receiving the PDSCH.

After introducing intermediate nodes such as a repeater, a smart repeater, and a reconfigurable intelligent surface (RIS) in a mobile communication NR system, if these intermediate nodes can achieve beam management and switching functions, delay of beam switching needs to be considered. After a network device sends control information to the intermediate nodes through a control link, the intermediate node needs a certain amount of time for beam conversion after receiving the control information. During this period, a terminal cannot receive data and control information from the intermediate nodes, resulting in loss of downlink control signaling and downlink data.

### SUMMARY

The present application proposes a beam switching method for an intermediate node and a device. When processing beam switching between a PDCCH and a PDSCH, as well as beam switching between different beams of the PDSCH, considering a delay effect caused by a duration of beam switching, whether data is received at switching time and which beam is used for receiving are determined, so as to solve a problem of loss of downlink control signaling and downlink data during a beam switching process of the intermediate nodes.

The present application proposes a beam switching method for an intermediate node, applied to a wireless communication system, wherein the wireless communication system includes a network device, an intermediate node apparatus and user equipment, and a service signal sent by the network device is transmitted to the user equipment via the intermediate node apparatus.

In a first aspect, a beam switching method for an intermediate node proposed by an embodiment of the present application is used on a network side, and includes the following steps:
sending control information, wherein the control information includes a beam switching indication for the intermediate node;
sending, within a first threshold duration after sending the control information, downlink control signaling and/or data by using a beam controlled by an intermediate node before switching; and
sending, after a sum of the first threshold duration and a second threshold duration following sending of the control information, the downlink control signaling and/or the data by using a beam controlled by an intermediate node after switching.

Preferably, following sending of the control information, after the first threshold duration and within the sum of the first threshold duration and the second threshold duration, the downlink control signaling and/or the data are/is not sent.

Preferably, following sending of the control information, after the first threshold duration and within the sum of the first threshold duration and the second threshold duration, the downlink control signaling and/or the data are/is not transmitted back to the intermediate node.

Preferably, the method further includes the following step: sending, following sending of the control information, after the first threshold duration and within the sum of the first threshold duration and the second threshold duration, the downlink control signaling and/or the data through a network-side beam.

Preferably, the method further includes the following step: sending indication information of a first threshold duration and/or a second threshold duration to a terminal device.

In a second aspect, a beam switching method for an intermediate node proposed by an embodiment of the present application is used on an intermediate-node side, and includes the following steps:
receiving control information, wherein the control information includes a beam switching indication for the intermediate node;
forwarding, within a first threshold duration after receiving the control information, downlink control signaling and/or data by using a beam controlled by an intermediate node before switching; and
forwarding, after a sum of the first threshold duration and a second threshold duration following receiving of the control information, the downlink control signaling and/or the data by using a beam controlled by an intermediate node after switching.

Preferably, within the first threshold duration after receiving the control information, the intermediate node completes demodulation and decoding of the control information.

Preferably, following receiving of the control information, after the first threshold duration and within the sum of the first threshold duration and the second threshold duration, the intermediate node completes beam switching.

In a third aspect, a beam switching method for an intermediate node proposed by an embodiment of the present application is used on a terminal side, and includes the following steps:
receiving indication information of a first threshold duration and/or a second threshold duration;
receiving, within a first threshold duration after a network device sends the control information, downlink control signaling and/or data by using a beam controlled by an intermediate node before switching; and
receiving, after a sum of the first threshold duration and a second threshold duration following sending of the control information by the network device, the downlink control signaling and/or the data by using a beam controlled by an intermediate node after switching.

Preferably, following sending of the control information by the network device, after the first threshold duration and within the sum of the first threshold duration and the second threshold duration, the downlink control signaling and/or the data are/is not received, or the downlink control signaling and/or the data are/is received through a network-side beam.

Preferably, the indication information of the first threshold duration and/or the second threshold duration comes from a forwarding link or directly from the network device.

In any one of the embodiments of the first, second, and third aspects of the present application, preferably, the first threshold duration is not less than maximum time for the intermediate node to complete demodulation and decoding of control information of a control link from the network side.

In any one of the embodiments of the first, second, and third aspects of the present application, preferably, the second threshold duration is not less than maximum time required for the intermediate node to perform beam switching.

In any one of the embodiments of the first, second, and third aspects of the present application, preferably, the first threshold duration and/or the second threshold duration are/is represented as the number of time slots or the number of symbols corresponding to different subcarriers.

In any one of the embodiments of the first, second, and third aspects of the present application, preferably, the indication information of the first threshold duration and/or the second threshold duration is transmitted to the network device by at least one intermediate node.

In any one of the embodiments of the first, second, and third aspects of the present application, preferably, before the steps, the method further includes the following step: determining the first threshold duration and/or the second threshold duration according to characterization data of a processing capability of one or more intermediate nodes.

Further preferably, the characterization data of the processing capability is transmitted to the network device by at least one intermediate node.

In a fourth aspect, an embodiment of the present application further proposes a communication device, disposed on a network side and used to implement the method described in any one of the first aspect of the present application. At least one module in the communication device is used for at least one of the following functions: sending the control information, determining a first threshold duration and a second threshold duration, or sending downlink control signaling and/or data.

In a fifth aspect, an embodiment of the present application further proposes a communication device, disposed on an intermediate node and used to implement the method described in any one of the second aspect of the present application. At least one module in the communication device is used for at least one of the following functions: receiving the control information, determining a first threshold duration and a second threshold duration, or forwarding downlink control signaling and/or data.

In a sixth aspect, an embodiment of the present application further proposes a communication device, disposed on a terminal side and used to implement the method described in any one of the second aspect of the present application. At least one module in the communication device is used for at least one of the following functions: receiving indication information of a first threshold duration and/or a second threshold duration, or receiving downlink control signaling and/or data from a network device or a forwarding link.

To achieve the devices of the fourth, fifth, and sixth aspects of the present application, the present application further proposes a communication device, including a memory, a processor, and a computer program stored on the memory and runnable on the processor, wherein the computer program, when executed by the processor, implements the steps of the method according to any embodiment of the present application.

To achieve the devices of the fourth, fifth, and sixth aspects of the present application, the present application further proposes a computer readable medium, having a computer program stored thereon, wherein the computer program, when executed by a processor, implements the steps of the method according to any embodiment of the present application.

In a seventh aspect, the present application further proposes a mobile communication system, including at least one network device as described in any embodiment of the present application, and at least one intermediate node as described in any embodiment of the present application. Further, the mobile communication system further includes at least one terminal device as described in any embodiment of the present application.

The above at least one technical solution adopted in the embodiments of the present application can achieve the following beneficial effects:
when there is a beam switching delay in the mobile communication system applied to the intermediate node in the present disclosure, a base station and the intermediate node achieve time slot alignment during a beam switching process, and how the base station determines the timing of the intermediate node to perform beam switching when sending the control information to instruct the intermediate node to perform beam switching on the control link, and how the base station schedules the control information and data for the terminal of the forwarding link during the beam switching process of the intermediate node are clarified. On the one hand, the problem of inconsistent understanding of the beams controlled by the base station and the intermediate node before and after the beam switching during the beam switching process caused by the introduction of the intermediate node can be effectively solved. On the other hand, the problem that the terminal cannot receive beam information during the beam switching process caused by the introduction of intermediate node, and thus cannot receive the control information and data for the demodulation forwarding link is also solved.

### BRIEF DESCRIPTION OF DRAWING(S)

Accompanying drawings illustrated here are used for providing a further understanding of the present application, and constitute a part of the present application. The schematic embodiments and their explanations of the present application are used for explaining the present application and do not constitute an improper limitation on the present application. In the accompanying drawings:
FIG. 1 is a schematic diagram of a multi-antenna wireless communication system provided with an intermediate node.
FIG. 2 is a timing diagram of an embodiment of a method in the present application.
FIG. 3 is a flowchart of an embodiment of a method for a network device in the present application.
FIG. 4 is another timing diagram of an embodiment of a method in the present application.
FIG. 5 is a flowchart of an embodiment of a method for an intermediate node in the present application.
FIG. 6 is a flowchart of an embodiment of a method for a terminal device in the present application.
FIG. 7 is a schematic diagram of an embodiment of a network device.
FIG. 8 is a schematic diagram of an embodiment of an intermediate node.
FIG. 9 is a schematic diagram of an embodiment of a terminal device.
FIG. 10 is a schematic structural diagram of a network device in the present disclosure.
FIG. 11 is a block diagram of an intermediate node in the present disclosure.
FIG. 12 is a block diagram of a terminal device in the present disclosure.

### DETAILED DESCRIPTION

In order to make the objectives, technical solutions and advantages of the present application clearer, the technical solutions of the present application are clearly and completely described below in conjunction with specific embodiments of the present application and corresponding accompanying drawings. Apparently, the described embodiments are only part of the embodiments of the present application, not all of the embodiments. All other embodiments obtained by those ordinarily skilled in the art based on the embodiments in the present application without creative efforts shall fall within the protection scope of the present application.

The technical solutions provided by the embodiments of the present application are described in detail below in combination with the accompanying drawings.

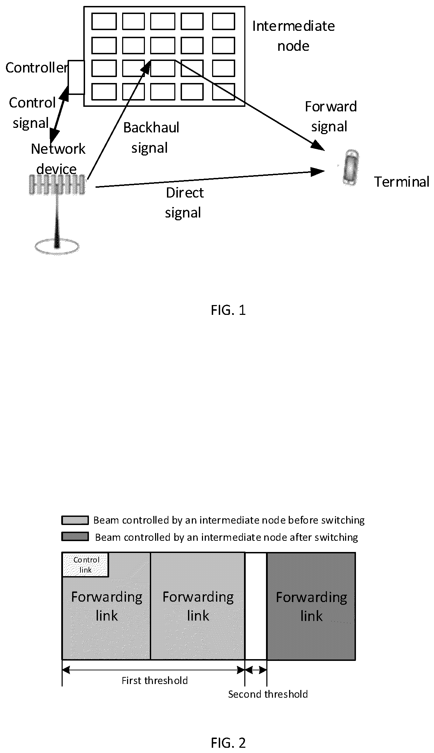

FIG. 1 is a schematic diagram of a multi-antenna wireless communication system provided with an intermediate node.

It should be noted that the intermediate node in the present application uses reflection or refraction to control waveform parameters of electromagnetic waves during propagation in a communication channel so as to improve performance of the communication system, and is not limited to the use of a reconfigurable intelligent surface technology.

After introducing intermediate nodes such as a repeater, a smart repeater, and a reconfigurable intelligent surface in a mobile communication NR system, if these intermediate nodes can achieve beam management and switching functions, delay of beam switching needs to be considered. For example, a beam switching delay of a reconfigurable intelligent surface controlled by a diode can reach the microsecond level, and a beam switching delay of a reconfigurable intelligent surface controlled by a liquid crystal can reach the millisecond level. A duration of beam switching mentioned above cannot be ignored. There is a control link between a network device and the intermediate node, and the control link is used to control a beam direction of the intermediate node. There is also a backhaul link between the network device and the intermediate node, and the backhaul link is used to send a backhaul signal to the intermediate node and then forward the backhaul signal to a terminal device. After the network device sends control information to the intermediate node through the control link, the intermediate node needs a certain amount of time for beam conversion after receiving the control information. During this period, a terminal cannot receive data and control information from the intermediate node, resulting in loss of downlink control signaling and downlink data.

FIG. 2 is a timing diagram of an embodiment of a method in the present application. An embodiment of the present application provides a beam switching method for an intermediate node, applied to a wireless communication system, wherein the wireless communication system includes a network device, an intermediate node apparatus and user equipment, and a service signal sent by the network device is transmitted to the user equipment via the intermediate node apparatus.

As shown in the figure, the present application proposes a beam switching indication method for an intermediate node and a device. A first threshold duration is a threshold of a duration required for the intermediate node to complete demodulation and decoding of control information of a control link sent from a base station, and a second threshold duration is a threshold of a delay required for the intermediate node to perform beam switching. The intermediate node reports parameters that characterize a processing capability of the intermediate node or information about the first threshold duration and the second threshold duration to the network device.

The first threshold duration and the second threshold duration are defined as different numerical values according to the capability of the intermediate node, and the numerical values are the number of time slots or the number of symbols corresponding to different subcarriers. Within a time of the first threshold duration after receiving the control information of the control link, the intermediate node still forwards control information and data of the forwarding link by using a beam before switching.

Following receiving of the control information of the control link, the intermediate node switches a forwarding link beam after the first threshold duration and within a sum of the first threshold duration and the second threshold duration. After a sum of the first threshold duration and the second threshold duration following receiving of the control information of the control link, the intermediate node forwards the control information and data of the forwarding link by using a beam indicated by the control information of the control link.

Time slots of the base station and the intermediate node are aligned, and the base station does not send downlink control signaling and/or data within the second threshold duration after the first threshold duration of sending the control link, or sends data and control information by using the beam of the base station within the second threshold duration after the first threshold duration.

The terminal receives the downlink control signaling or downlink data on a time-frequency resource of the forwarding link indicated by the base station by using a beam from the intermediate node or a beam from the base station on the indicated forwarding link.

The following further explains how to define the first threshold duration as the threshold set by the intermediate node to complete the demodulation and decoding of the control information of the control link sent from the base station.

Preferably, the first threshold duration is not less than maximum time for the intermediate node to complete the demodulation and decoding of the control information of the control link from the network side. For example, the numerical value of a first threshold is defined as the number of time slots or the number of symbols corresponding to different subcarriers based on the intermediate nodes with different capabilities. For example, the unit is the number of symbols.

The duration of the first threshold is the threshold defined by the intermediate node according to the processing capability of the intermediate node for PDCCH demodulation and decoding. Preferably, the numerical values of the first threshold are defined as 7, 14, and 28 symbols when a subcarrier spacing is 60 kHz, and the numerical values of the first threshold are defined as 14 and 28 symbols when the subcarrier spacing is 120 kHz. The duration of the first threshold is the time for the intermediate node to receive and decode a PDCCH, and the intermediate node does not yet know the converted beam information of the intermediate node indicated by the control link.

| Subcarrier spacing u | Symbol length (us) | First threshold type1 (number of symbols) | First threshold type2 (number of symbols) | First threshold typen (number of symbols) | First threshold typeN (number of symbols) |
|---|---|---|---|---|---|
| 0 (15kHz) | 66.67 | A1 | A2 | ... | AN |
| 1 (30 kHz) | 33.33 | B1 | B2 | ... | BN |
| 2 (60kHz) | 16.67 | C1 | C2 | ... | CN |
| 3 (120kHz) | 8.33 | D1 | D2 | ... | DN |
| 4 (240kHz) | 4.17 | E1 | E2 | ... | EN |

The following further explains how to define the second threshold as the threshold set for the delay required for beam switching by the intermediate node. Preferably, the second threshold duration is not less than maximum time required for the intermediate node to perform beam switching. The second threshold is defined as different numerical values according to the capability of the intermediate node, and the numerical values are the number of time slots or the number of symbols corresponding to different subcarriers.

For example, as shown in the table below, different types of intermediate nodes support different second thresholds based on their own beam switching capabilities. The unit of a specific numerical value of the second threshold is the number of symbols, and how many µs numerical values represented by one symbol length depends on the different subcarrier spacings. Taking the 15 kHz subcarrier spacing as an example, one symbol length is 66.67 us, the second threshold for the intermediate node of the n-th type of capability is An symbols, and so on. For the 240 kHz subcarrier spacing, one time slot length is 4.17 us, the intermediate node of the n-th type of capability is En symbols.

| Subcarrier spacing u | Symbol length (us) | Second threshold type1 (number of symbols) | First threshold type2 (number of symbols) | First threshold typen (number of symbols) | First threshold type N (number of symbols) |
|---|---|---|---|---|---|
| 0 (15kHz) | 66.67 | F1 | F2 | ... | FN |
| 1 (30 kHz) | 33.33 | G1 | G2 | ... | GN |
| 2 (60kHz) | 16.67 | H1 | H2 | ... | HN |
| 3 (120kHz) | 8.33 | D1 | D2 | ... | DN |
| 4 (240kHz) | 4.17 | E1 | E2 | ... | EN |

Further, to achieve time slot alignment between the intermediate node and the network device, the intermediate node reports parameters that characterize the processing capability of the intermediate node, or information about the first threshold and the second threshold to the network device.

Manner 1: the intermediate node searches for data of the first threshold and the second threshold according to its own capability and reports the data to the network device.

Manner 2: the first threshold and the second threshold are bound with the capability definitions of the intermediate node, as shown in the table, intermediate nodes with different capability types correspond to different first thresholds and second thresholds, and the intermediate nodes only need to report their capability types.

| Index of intermediate node capability types | First threshold | Second threshold |
|---|---|---|
| 0 | First threshold Type1 | Second threshold type1 |
| 1 | First threshold Type1 | Second threshold type2 |
| ... | ... | ... |
| M | First threshold typeN | Second threshold typeN |

Preferably, manner 2 is used for reporting.

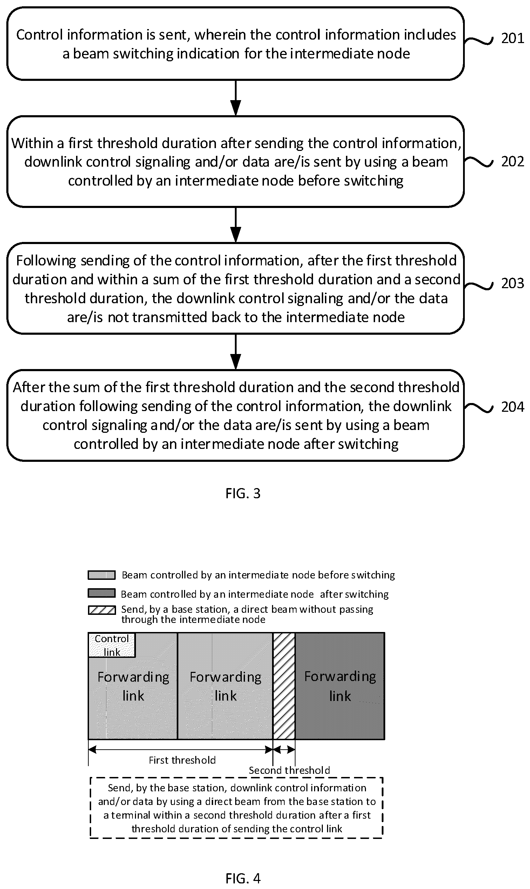

FIG. 3 is a flowchart of an embodiment of a method for a network device in the present application.

A beam switching method for an intermediate node proposed by an embodiment of the present application is used on a network side, and includes the following steps 201-204.

Step 201, control information is sent, wherein the control information includes a beam switching indication for the intermediate node.

It should be noted that the "control information" described in all embodiments of the present application refers to the control information transmitted through a control link between the network device and the intermediate node. The control information is used to control the intermediate node to set a beam direction.

Step 202, within a first threshold duration after sending the control information, downlink control signaling and/or data are/is sent by using a beam controlled by an intermediate node before switching.

Step 203, following sending of the control information, after the first threshold duration and within a sum of the first threshold duration and a second threshold duration, the downlink control signaling and/or the data are/is not transmitted back to the intermediate node.

Preferably, following sending of the control information, after the first threshold duration and within the sum of the first threshold duration and the second threshold duration, the downlink control signaling and/or the data are/is not sent.

Alternatively, following sending of the control information, after the first threshold duration and within the sum of the first threshold duration and the second threshold duration, the downlink control signaling and/or the data are/is sent through a network-side beam.

Step 204, after the sum of the first threshold duration and the second threshold duration following sending of the control information, the downlink control signaling and/or the data are/is sent by using a beam controlled by an intermediate node after switching.

Preferably, before steps 201-204, indication information of the first threshold duration and/or the second threshold duration is transmitted to the network device by at least one intermediate node. Alternatively, characterization data of a processing capability is transmitted to the network device by at least one intermediate node.

Preferably, before step 202, the method further includes the following step: the first threshold duration is determined according to the characterization data of the processing capability of one or more intermediate nodes. Before step 203, the method further includes the following step: the second threshold duration is determined according to the characterization data of the processing capability of one or more intermediate nodes.

Preferably, before step 202, the method further includes the following step: the network device sends indication information of the first threshold duration and/or the second threshold duration to a terminal device. Before step 203, the method further includes the following step: the network device sends the indication information of the second threshold duration to the terminal device. The indication information of the first threshold duration and/or the second threshold duration is carried by high-level signaling, or MAC CE, or physical layer dynamic downlink control signaling; is sent to a terminal through a forwarding link, or is directly sent to the terminal by the network device.

FIG. 4 is another timing diagram of an embodiment of a method in the present application.

Time slots of a base station and the intermediate node are aligned, and the base station does not send the downlink control signaling and/or data to the terminal within the second threshold duration after the first threshold duration of sending the control link, or sends data and control information by using a beam of the base station within the second threshold duration after the first threshold duration.

Manner 1: as shown in the figure, the base station sends the downlink control signaling and/or data by using a beam controlled by the intermediate node before switching within the first threshold duration after sending the control information of the control link of the intermediate node according to information of the first threshold and the second threshold reported by the intermediate node. The base station does not send the downlink control signaling and/or data within the second threshold duration after the first threshold duration of sending the control link, and sends the downlink control signaling and/or data by using the beam controlled by the intermediate node after switching after the second threshold duration following the first threshold duration after sending of the control link.

This manner is suitable for a situation where a location of the terminal cannot receive a direct beam from the base station, or a situation where the location of the terminal can receive the direct beam from the base station, but switching time of the intermediate node is short, such as a situation where the second threshold duration is less than one time slot or 7 symbols.

Manner 2: as shown in the figure, the base station sends the downlink control signaling and/or data by using the beam controlled by the intermediate node before switching within the first threshold duration after sending the control information of the control link of the intermediate node according to the information of the first threshold and the second threshold reported by the intermediate node. The base station sends the downlink control signaling and/or data by using a direct beam controlled by the base station and sent to the terminal by the base station within the second threshold duration after the first threshold duration of sending the control link, sends beam information to the terminal through the control information of the forwarding link, and sends the downlink control signaling and/or data by using the beam controlled by the intermediate node after switching after the second threshold duration following the first threshold duration after sending of the control link.

On one hand, this manner is suitable for a situation where the location of the terminal can receive the direct beam from the base station, but the switching time of the intermediate node is long, such as a situation where the second threshold duration is longer than one time slot or 7 symbols.

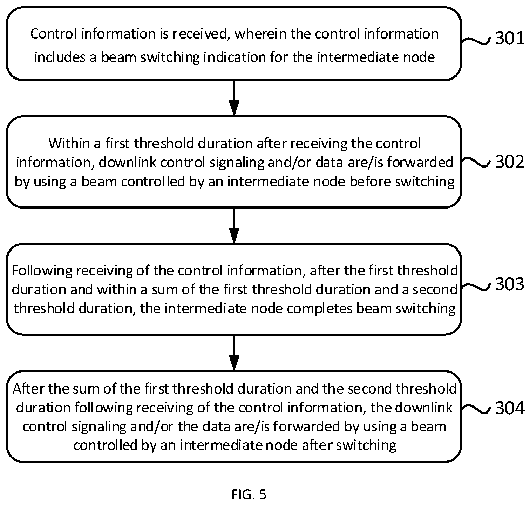

FIG. 5 is a flowchart of an embodiment of a method for an intermediate node in the present application.

A beam switching method for an intermediate node proposed by an embodiment of the present application is used on an intermediate-node side, and includes the following steps:

step 301, control information is received, wherein the control information includes a beam switching indication for the intermediate node.

Step 302, within a first threshold duration after receiving the control information, downlink control signaling and/or data are/is forwarded by using a beam controlled by an intermediate node before switching.

Within the first threshold duration after receiving the control information, the intermediate node completes demodulation and decoding of the control information.

Within the first threshold duration after receiving the control information of a control link, the intermediate node still forwards data of the forwarding link by using a beam before switching.

As shown in FIG. 2 or FIG. 4, a PDCCH of the control information of the intermediate node sent by the control link indicates a time-domain resource of a scheduled PDSCH, with a symbol located on the time-domain resource not less than the first threshold duration. In this way, when the network device instructs the intermediate node to perform beam switching, sufficient time is reserved for the intermediate node to decode the PDCCH and for the beam switching after decoding. After the successful beam switching of the intermediate node, the terminal device can use a received beam indicated by the PDCCH to receive the scheduled downlink data PDSCH.

Step 303, following receiving of the control information, after the first threshold duration and within a sum of the first threshold duration and a second threshold duration, the intermediate node completes beam switching.

Step 304, after the sum of the first threshold duration and the second threshold duration following receiving of the control information, the downlink control signaling and/or the data are/is forwarded by using a beam controlled by an intermediate node after switching.

Following receiving of the control information of the control link, the intermediate node switches a forwarding link beam after the first threshold duration, and after the sum of the first threshold duration and the second threshold duration, the forwarding link forwards the data by using a beam indicated by the control information of the control link.

Preferably, before steps 301-304, indication information of the first threshold duration and/or the second threshold duration is transmitted to the network device by at least one intermediate node. Alternatively, characterization data of a processing capability is transmitted to the network device by at least one intermediate node.

Preferably, before step 302, the method further includes the following step: the first threshold duration is determined according to the characterization data of the processing capability of one or more intermediate nodes. Before step 303, the method further includes the following step: the second threshold duration is determined according to the characterization data of the processing capability of one or more intermediate nodes.

Preferably, before step 302, the method further includes the following step: the intermediate node forwards (or sends) the indication information of the first threshold duration and/or the second threshold duration to the terminal device. Before step 303, the method further includes the following step: the intermediate node sends the indication information of the second threshold duration to the terminal device. The indication information of the first threshold duration and/or the second threshold duration is carried by high-level signaling, or an MAC CE, or physical layer dynamic downlink control signaling.

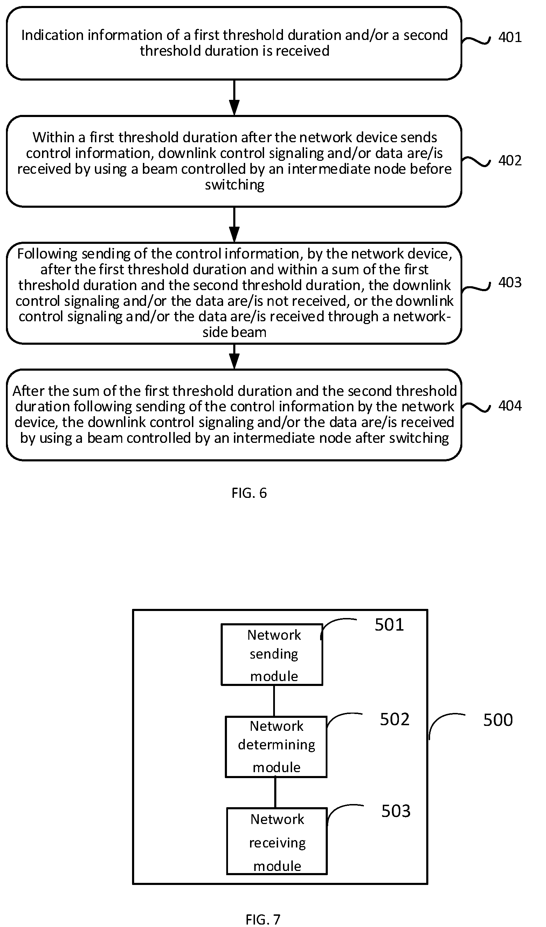

FIG. 6 is a flowchart of an embodiment of a method for a terminal device in the present application.

A beam switching method for an intermediate node proposed by an embodiment of the present application is used on a terminal side, and includes the following steps:
step 401, indication information of a first threshold duration and/or a second threshold duration is received.

Preferably, the indication information of the first threshold duration and/or the second threshold duration comes from a forwarding link or directly from a network device.

For example, while sending beam switching control information for a control link to the intermediate node, the base station uses high-level signaling or an MAC CE or physical layer dynamic downlink control signaling to indicate a first threshold, a second threshold and beam information of the second threshold for receiving downlink control signaling or downlink data to a terminal on a forwarding link.

Step 402, within a first threshold duration after the network device sends control information, downlink control signaling and/or data are/is received by using a beam controlled by an intermediate node before switching.

Step 403, preferably, following sending of the control information, by the network device, after the first threshold duration and within a sum of the first threshold duration and a second threshold duration, the downlink control signaling and/or the data are/is not received, or the downlink control signaling and/or the data are/is received through a network-side beam.

Step 404, after the sum of the first threshold duration and the second threshold duration following sending of the control information by the network device, the downlink control signaling and/or the data are/is received by using a beam controlled by an intermediate node after switching.

In steps 403-404, the terminal receives the downlink control signaling or downlink data on a time-frequency resource of the forwarding link indicated by the base station by using a beam from the intermediate node or a beam from the base station on the indicated forwarding link.

FIG. 7 is a schematic diagram of an embodiment of a network device.

An embodiment of the present application further proposes a communication device (i.e., a network device), using the method in any embodiment of the present application. At least one module in the network device is used for at least one of the following functions: sending the control information, determining a first threshold duration and a second threshold duration, or sending downlink control signaling and/or data.

To implement the above technical solution, the communication device 500 proposed by the present application includes a network sending module 501, a network determining module 502, and a network receiving module 503.

The network sending module is configured to send the control information, downlink control signaling and/or data.

The network determining module is configured to determine a first threshold duration and/or a second threshold duration according to characterization data of a processing capability of an intermediate node, and to determine that a timing of sending the downlink control signaling and/or data using a beam controlled by an intermediate node before switching is the timing not later than the first threshold duration after sending the control information. The network determining module is further configured to determine that a timing of sending the downlink control signaling and/or data using a beam controlled by an intermediate node after switching is the timing not earlier than a sum of the first threshold duration and the second threshold duration after sending the control information. Further, the network determining module is further configured to determine a timing for not transmitting the downlink control signaling and/or data back to the intermediate node, and to determine that the timing of sending the downlink control signaling and/or data through a network-side beam is the timing after the first threshold duration following sending of the control information and within the sum of the first threshold duration and the second threshold duration.

The network receiving module is configured to receive information from the intermediate node, including characterization data of a processing capability of the intermediate node, and indication information of the first threshold duration and/or the second threshold duration.

Other specific methods for implementing functions of the network sending module, the network determining module and the network receiving module are as described in the method embodiments of the present application, which are not repeated here.

The network device described in the present application may be a network-side device or a network-side processing device connected to a network side.

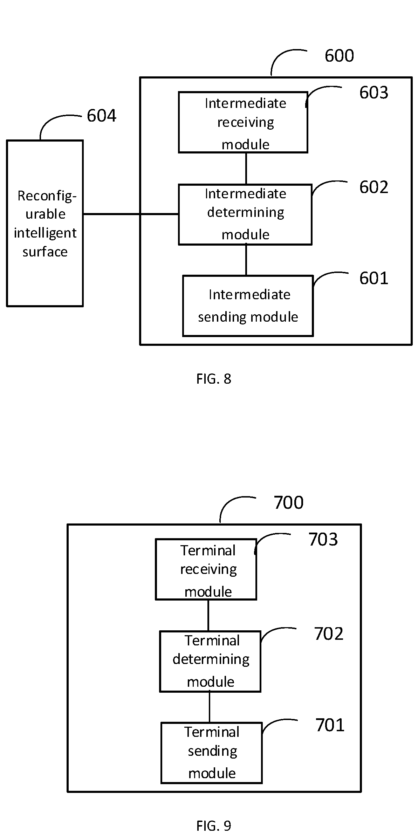

FIG. 8 is a schematic diagram of an embodiment of an intermediate node.

The present application further proposes a communication device (i.e., an intermediate node), using the method in any embodiment of the present application. At least one module in the intermediate node is used for at least one of the following functions: receiving the control information, determining a first threshold duration and a second threshold duration, or forwarding downlink control signaling and/or data.

To implement the above technical solution, an intermediate node 600 for controlling a reflection unit (such as a reconfigurable intelligent surface 604) or other phase transformation apparatus proposed by the present application includes an intermediate sending module 601, an intermediate determining module 602, and an intermediate receiving module 603.

The intermediate receiving module is configured to receive the control information.

The intermediate determining module is configured to determine that a timing of forwarding downlink control signaling and/or data using a beam controlled by an intermediate node before switching is the timing not later than a first threshold duration after receiving the control information, and is further configured to determine that a timing of forwarding the downlink control signaling and/or data using a beam controlled by an intermediate node after switching is the timing not earlier than a sum of the first threshold duration and the second threshold duration after receiving the control information.

The intermediate receiving module is configured to forward a downlink signal and an uplink signal, and is further configured to send characterization data of a processing capability of the intermediate node, as well as indication information of the first threshold duration and/or the second threshold duration to a network device or a terminal device.

The intermediate node described in the present application may refer to a mobile terminal connected to a reflection unit or other phase transformation apparatuses or other devices dedicated to controlling the reflection unit or other phase transformation apparatuses.

FIG. 9 is a schematic diagram of an embodiment of a terminal device.

The present application further proposes a communication device (i.e., a terminal device), using the method of any embodiment of the present application. At least one module in the terminal device is used for at least one of the following functions: receiving indication information of a first threshold duration and/or a second threshold duration, or receiving downlink control signaling and/or data from a network device or a forwarding link.

To implement the above technical solution, the terminal device 700 proposed by the present application includes a terminal sending module 701, a terminal determining module 702, and a terminal receiving module 703.

The terminal receiving module is configured to receive downlink control signaling and/or data directly from a network device or forwarded via an intermediate node, as well as indication information of a first threshold duration and/or a second threshold duration directly from the network device and the intermediate node, or forwarded via the intermediate node.

The terminal determining module is configured to determine that a timing of receiving the downlink control signaling and/or data using a beam controlled by an intermediate node before switching is the timing not later than a first threshold duration after the network device sends the control information, and is further configured to determine that a timing of receiving the downlink control signaling and/or data using a beam controlled by an intermediate node after switching is the timing not earlier than a sum of the first threshold duration and the second threshold duration after the network device sends the control information. The terminal determining module is further configured to determine a timing for not receiving the downlink control signaling and/or data, and to determine that a timing of receiving the downlink control signaling and/or data through a network-side beam is the timing after the first threshold duration following sending of the control information by the network device and within the sum of the first threshold duration and the second threshold duration.

The terminal sending module is configured to send uplink information.

The terminal device described in the present application may be a mobile terminal device.

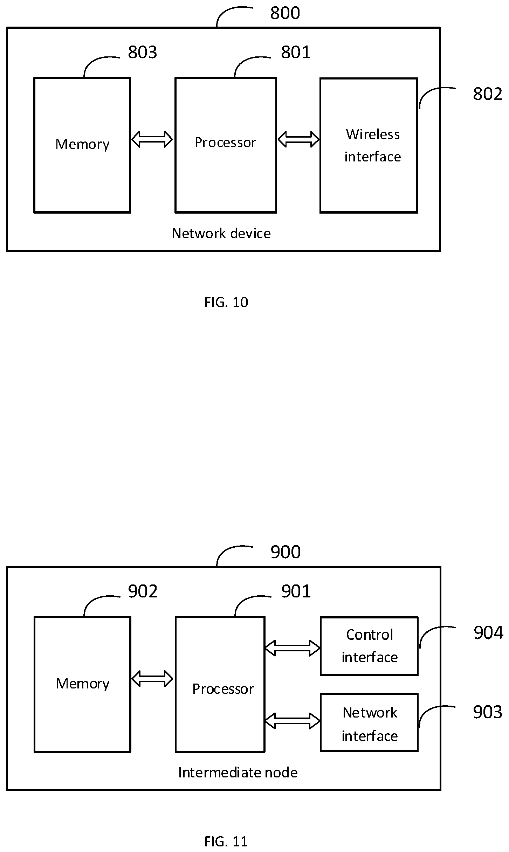

Fig. 10 shows a schematic structural diagram of a network device in another embodiment of the present disclosure. As shown in the figure, a network device 800 includes a processor 801, a wireless interface 802 and a memory 803. The wireless interface may be a plurality of components, namely including a transmitter and a receiver, which provides units for being in communication with various other apparatuses on a transmission medium. The wireless interface achieves a communication function with the intermediate node device and processes wireless signals through a receiving apparatus and a transmitting apparatus, and data carried by its signals communicates with the memory or processor through an internal bus structure. The memory 803 includes a computer program for executing any embodiment related to the network device and the terminal device, and the computer program runs or changes on the processor 801. Circuits of the memory, processor and wireless interface are connected through a bus system. The bus system includes a data bus, a power bus, a control bus and a state signal bus, which will not be repeated here.

Fig. 11 shows a schematic structural diagram of an intermediate node. An intermediate node 900 includes at least a processor901, a memory902, a network interface 903 and at least a control interface 904. The components in an intermediate node 900 are coupled through a bus system for connections and communications among them. The bus system includes a data bus, a power bus, a control bus and a state signal bus.

The control interface 904 is used for connecting the phase transformation apparatus (e.g. super surface) in the intermediate node, to transform the multi sets of control paraments into the driving signals for every single surface unit, so that the signal reflected (or refracting) from an intermediate node can be adjusted.

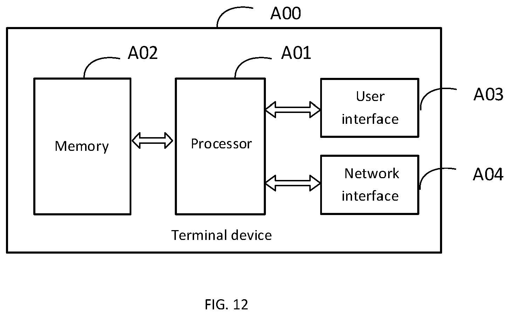

Fig. 12 is a block diagram of a terminal device in another embodiment of the present disclosure. The terminal device A00 includes at least one processor A01, a memory A02, a user interface A03 and at least one network interface A04. All components in the terminal device A00 are coupled together through the bus system. The bus system is configured to achieve connection and communication between the components. The bus system includes a data bus, a power bus, a control bus and a state signal bus.

The user interface A03 may include a display, a keyboard or a clicking device, such as a mouse, a trackball, a touch board, a touch screen or the like.

The memory 902,A02 stores an executable module or data structure. The memory may store an operating system and an application program. The operating system includes various system programs, such as a framework layer, a core library layer and a driving layer, which is used for implementing various basic services and processing hardware-based tasks. The application program includes various application programs, such as a media player and a browser, which is used for implementing various application services.

In the embodiment of the present disclosure, the memory 902 includes a computer program for executing any intermediate node embodiment of the present application, or, the memory A02 includes a computer program for executing any terminal node embodiment of the present application, and the computer program runs or changes on the processor 901,A01.

The memory 902, A02 includes a computer readable storage medium, and the processor 901,A01 reads information in the memory 902,A02 and completes steps of the above method in conjunction with hardware thereof. Specifically, the computer readable storage medium stores a computer program, and the computer program, when executed by the processor 901, A01, implements all steps of the method embodiment in any above embodiment.

The processor 901, A01 may be an integrated circuit chip, and has a signal processing capability. In an implementation process, steps of the method of the present application may be completed by using an integrated logic circuit of hardware in the processor 901,A01 or instructions in a form of software. The processor 701 may be a general-purpose processor, a digital signal processor, an application specific integrated circuit, a field programmable gate array or other programmable logic devices, a discrete gate or a transistor logic device, or a discrete hardware component. It may implement or execute methods, steps and logic block diagrams disclosed in the embodiments of the present disclosure. The general-purpose processor may be a microprocessor, or the processor may be any conventional processor or the like. The steps of the methods disclosed with reference to the embodiments of the present disclosure may be directly executed and completed by using a hardware decoding processor, or may be performed and completed by using a combination of hardware and software modules in the decoding processor.

Those skilled in the art should understand that the embodiments of the present disclosure may be provided as methods, systems, or computer program products. Therefore, the present disclosure may take the form of a full hardware embodiment, a full software embodiment, or an embodiment combining software and hardware. In a typical configuration, a device of the present application includes one or more central processing units (CPUs), an input/output user interface, a network interface, and a memory.

Besides, the present disclosure may adopt the form of a computer program product implemented on one or more computer available storage media (including but not limited to a disk memory, a CD-ROM, an optical memory and the like) containing computer available program codes.

Therefore, the present application further provides a computer readable medium, storing a computer program thereupon, and the computer program, when executed by a processor, implements steps of the method described in any embodiment of the present application. For example, the memories 803, 902 and A02 of the present disclosure may include a non-permanent memory, a random access memory (RAM) and/or a non-volatile memory in a computer readable medium, such as a read only memory (ROM) or a flash RAM.

Base on the above embodiments, the present application further provides a mobile communication system, including at least one embodiment of any intermediate node ang/or at least one embodiment of any network device in the present application. Further, the said mobile communication system also includes at least one embodiment of any terminal device in the present application.

It also needs to be noted that the terms "include", "contain", or any other variation thereof are intended to cover non-exclusive inclusions, so that a process, method, commodity, or device that includes a series of elements not only includes those elements, but also other elements that are not explicitly listed, or also includes elements inherent in such the process, method, commodity, or device. Without further limitations, an element limited by "include a/an..." does not exclude other same elements existing in the process, the method, the article, or the device that includes the element.

It further needs to be noted that, "first", "second" in the present application are intended to distinguish a plurality of objects of the same name. Unless otherwise specified, there is no other specific meanings.

The above are the only embodiments of the present application and are not intended to limit the present application. For those skilled in the art, the present application may have various modifications and changes. Any modifications, equivalent substitutions, improvements, etc. made within the spirit and principles of the present application shall be included within the scope of the claims of the present application.

## Claims

1. A beam switching method for an intermediate node, applied to a wireless communication system, wherein the wireless communication system comprises a network device, an intermediate node apparatus and user equipment, a service signal sent by the network device is transmitted to the user equipment via the intermediate node apparatus, and the method comprises the following steps on a network side:
sending control information, wherein the control information comprises a beam switching indication for the intermediate node; and
sending, after a threshold duration following sending of the control information, downlink control signaling and/or data by using a beam controlled by an intermediate node after switching.

2. The beam switching method for the intermediate node according to claim 1, wherein
the threshold duration is a sum of a first threshold duration and a second threshold duration; and within a first threshold duration after sending the control information, the downlink control signaling and/or the data are/is sent by using a beam controlled by an intermediate node before switching.

3. The beam switching method for the intermediate node according to claim 1, wherein
following sending of the control information, after a first threshold duration and within a sum of the first threshold duration and a second threshold duration, the downlink control signaling and/or the data are/is not sent, and/or
following sending of the control information, after the first threshold duration and within the sum of the first threshold duration and the second threshold duration, the downlink control signaling and/or the data are/is not transmitted back to the intermediate node.

4. The beam switching method for the intermediate node according to claim 3, further comprising the following steps:
sending, following sending of the control information, after a first threshold duration and within a sum of the first threshold duration and a second threshold duration, the downlink control signaling and/or the data through a network-side beam.

5. The beam switching method for the intermediate node according to claim 1, wherein indication information of a first threshold duration and/or a second threshold duration is sent to a terminal device.

6. A beam switching method for an intermediate node, applied to a wireless communication system, wherein the wireless communication system comprises a network device, an intermediate node apparatus and user equipment, a service signal sent by the network device is transmitted to the user equipment via the intermediate node apparatus, and the method comprises the following steps on an intermediate-node side:
receiving control information, wherein the control information comprises a beam switching indication for the intermediate node; and
forwarding, after a threshold duration following receiving of the control information, downlink control signaling and/or data by using a beam controlled by an intermediate node after switching.

7. The beam switching method for the intermediate node according to claim 6, wherein
the threshold duration is a sum of a first threshold duration and a second threshold duration; and within a first threshold duration after receiving the control information, the downlink control signaling and/or the data are/is forwarded by using a beam controlled by an intermediate node before switching.

8. The beam switching method for the intermediate node according to claim 6, wherein
within a first threshold duration after receiving the control information, the intermediate node completes demodulation and decoding of the control information, and/or
following receiving of the control information, after the first threshold duration and within a sum of the first threshold duration and a second threshold duration, the intermediate node completes beam switching.

9. A beam switching method for an intermediate node, applied to a wireless communication system, wherein the wireless communication system comprises a network device, an intermediate node apparatus and user equipment, a service signal sent by the network device is transmitted to the user equipment via the intermediate node apparatus, and the method comprises the following steps on a terminal side:
receiving indication information of a first threshold duration and/or a second threshold duration;
receiving, within a first threshold duration after the network device sends control information, downlink control signaling and/or data by using a beam controlled by an intermediate node before switching; and
receiving, after a sum of the first threshold duration and a second threshold duration following sending of the control information by the network device, the downlink control signaling and/or the data by using a beam controlled by an intermediate node after switching.

10. The beam switching method for the intermediate node according to claim 9, wherein
following the sending of the control information by the network device, after the first threshold duration and within the sum of the first threshold duration and the second threshold duration,
the downlink control signaling and/or the data are/is not received, or the downlink control signaling and/or the data are/is received through a network-side beam.

11. The beam switching method for the intermediate node according to claim 9, wherein the indication information of the first threshold duration and/or the second threshold duration comes from a forwarding link or directly from the network device.

12. The beam switching method for the intermediate node according to any one of claims 1-11, wherein
the first threshold duration is not less than maximum time for the intermediate node to complete demodulation and decoding of control information of a control link from the network side.

13. The beam switching method for the intermediate node according to any one of claims 1-11, wherein
The second threshold duration is not less than maximum time required for the intermediate node to perform beam switching.

14. The beam switching method for the intermediate node according to any one of claims 1-11, wherein the first threshold duration and/or the second threshold duration are/is represented as the number of time slots or the number of symbols corresponding to different subcarriers.

15. The beam switching method for the intermediate node according to any one of claims 1-11, wherein the indication information of the first threshold duration and/or the second threshold duration is transmitted to the network device by at least one intermediate node.

16. The beam switching method for the intermediate node according to any one of claims 1-11, before the steps, further comprising the following steps:
determining the first threshold duration and/or the second threshold duration according to characterization data of a processing capability of one or more intermediate nodes.

17. The beam switching method for the intermediate node according to claim 16, wherein the characterization data of the processing capability is transmitted to the network device by at least one intermediate node.

18. A communication device, used to implement the method according to any one of claims 1-5 and 12-17 on a network side, wherein at least one module in the communication device is used for at least one of the following functions: sending the control information, determining a first threshold duration and a second threshold duration, or sending downlink control signaling and/or data.

19. A communication device, used for an intermediate node to implement the method according to any one of claims 6-8 and 12-17, wherein at least one module in the communication device is used for at least one of the following functions: receiving the control information, determining a first threshold duration and a second threshold duration, or forwarding downlink control signaling and/or data.

20. A communication device, used to implement the method according to any one of claims 9-17 on a terminal side, wherein at least one module in the communication device is used for at least one of the following functions: receiving indication information of a first threshold duration and/or a second threshold duration, or receiving downlink control signaling and/or data from a network device or a forwarding link.

21. A communication device, comprising a memory, a processor, and a computer program stored on the memory and runnable on the processor, wherein the computer program, when executed by the processor, implements the steps of the method according to any one of claims 1-17.

22. A computer readable medium, having a computer program stored thereon, wherein the computer program, when executed by a processor, implements the steps of the method according to any one of claims 1-17.
